# EUROPÄISCHE PATENTSCHRIFT

(11) **EP 3 740 992 B1**
(45) Veröffentlichungstag und Bekanntmachung des Hinweises auf die Patenterteilung: **04.08.2021**
(21) Anmeldenummer: 19701303.0
(22) Anmeldetag: 11.01.2019
(51) Int. Cl.: H01M 8/0258, H01M 8/0267, H01M 8/0204

(54) **BIPOLARPLATTE, BRENNSTOFFZELLE UND EIN KRAFTFAHRZEUG**
BIPOLAR PLATE, FUEL CELL, AND MOTOR VEHICLE
PLAQUE BIPOLAIRE, PILE À COMBUSTIBLE ET VÉHICULE AUTOMOBILE

(30) Priorität: 17.01.2018 DE 102018200673
(43) Veröffentlichungstag der Anmeldung: 25.11.2020
(73) Patentinhaber: Audi AG, 85045 Ingolstadt (DE); VOLKSWAGEN AG, 38440 Wolfsburg (DE)
(72) Erfinder: DICKSON, Brian Walter, Burnaby, British Columbia V5J 5J8 (CA); DESOUZA, Andrew, Burnaby, British Columbia V5J 5J8 (CA)
(86) Internationale Anmeldenummer: PCT/EP2019/050668
(87) Internationale Veröffentlichungsnummer: WO 2019/141601

(56) Entgegenhaltungen:
- DE-A1-102014 206 335

## Beschreibung

Die Erfindung betrifft eine Bipolarplatte für eine Brennstoffzelle mit einer Anodenplatte und einer Kathodenplatte, jeweils einen aktiven Bereich sowie zwei inaktive Bereiche aufweisend, wobei in jedem inaktiven Bereich ein Versorgungsbereich mit zwei Hauptgasports zur Zu- und Abführung von Reaktionsgasen und ein Kühlmittelhauptport zur Zu- und Abführung von Kühlmittel, und ein Verteilbereich zur Anbindung der zwei Hauptgasports und des Kühlmittelhauptports an den aktiven Bereich angeordnet sind, wobei die Anodenplatte und die Kathodenplatte derart ausgebildet und übereinander angeordnet sind, dass die Anodenplatte auf der von der Kathodenplatte abgewandten Seite offene Anodengaskanäle und die Kathodenplatte auf der von der Anodenplatte abgewandten Seite offene Kathodengaskanäle aufweist und, dass auf den einander zugewandten Seiten der Anodenplatte und der Kathodenplatte geschlossene Kühlmittelkanäle ausgebildet sind, eine Brennstoffzelle sowie ein Kraftfahrzeug.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-ElektrodenAnordnung (MEA für membrane electrode assembly), die ein Verbund aus einer Protonen leitenden Membran und jeweils einer beidseitig an der Membran angeordneten Elektrode (Anode und Kathode) ist. Im Betrieb der Brennstoffzelle wird der Brennstoff, insbesondere Wasserstoff H2 oder ein wasserstoffhaltiges Gasgemisch, der Anode zugeführt, wo eine elektrochemische Oxidation unter Abgabe von Elektronen stattfindet (H₂ → 2 H⁺ + 2 e⁻). Elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion des Sauerstoffs unter Aufnahme der Elektronen stattfindet (½ O₂ + 2 e⁻ → O²⁻). Gleichzeitig reagieren im Kathodenraum diese Sauerstoffanionen mit den über die Membran transportierten Protonen unter Bildung von Wasser (2 H⁺ + O²⁻ → H₂O). Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad. Die Kathodenreaktion stellt u. a. aufgrund der gegenüber von Wasserstoff geringeren Diffusionsgeschwindigkeit von Sauerstoff das Geschwindigkeitlimitierende Glied der Brennstoffzellenreaktion dar.

In der Regel wird die Brennstoffzelle durch eine Vielzahl im Stapel (stack) angeordneter Membran-Elektroden-Anordnungen gebildet, deren elektrische Leistungen sich addieren. Zwischen zwei Membran-Elektroden-Anordnungen eines Brennstoffzellenstapels ist jeweils eine Bipolarplatte angeordnet, die Kanäle zur Zuführung der Prozessgase zu der Anode beziehungsweise Kathode der benachbarten Membran-Elektroden-Anordnungen und Kühlkanäle zur Abführung von Wärme aufweist. Bipolarplatten bestehen aus einem elektrisch leitfähigen Material, um die elektrische Verbindung herzustellen. Sie weisen somit die dreifache Funktion der Prozessgasversorgung der Membran-Elektroden-Anordnungen, der Kühlung sowie der elektrischen Anbindung auf.

Bipolarplatten haben verschiedene Bereiche, die in einer Hauptströmungsrichtung der Prozessgase hintereinander angeordnet sind. Dies sind zunächst die Hauptkanäle oder Fluidports, über welche die Reaktanten und/oder das Kühlmittel zugeführt werden. Dann schließt sich ein Einströmbereich an, der zu einer Verteilstruktur überleitet. Die Verteilstruktur verteilt die Fluide, die dann einem Flussfeld zugeführt werden, wo die oben beschriebenen chemischen Reaktionen stattfinden.

Zweiteilige Bipolarplatten mit rinnenförmigen Vertiefungen auf den außen liegenden und den einander zugewandten Seiten zur Ausbildung von Reaktionsgaskanälen und Kühlmittelkanälen sind beispielsweise aus DE10330832A1, DE102010039276A1 und DE102010004160A1 bekannt.

Im Bereich der Verteilstruktur werden üblicherweise alle Betriebsmedien übereinander geführt, wobei die sich daraus ergebende Grundform, beispielsweise ein Dreieck, darstellt. In dieser dreieckigen Form werden die Medien über gerichtete Kanäle geleitet, um das Flussfeld über die gesamte Breite mit den Betriebsmedien zu versorgen.

Diese Verteilstrukturen haben üblicherweise den Nachteil, dass sie sehr raumgreifend sind und durch das Führen aller drei Medien in der Bipolarplatte übereinander mit unterschiedlichen Strömungsquerschnitten u.a. Probleme beim Gleichdruck auftreten können.

Der Erfindung liegt nun die Aufgabe zugrunde, eine Bipolarplatte bereitzustellen, die die Nachteile des Standes der Technik zumindest teilweise vermeidet.

Diese Aufgabe wird durch eine Bipolarplatte gemäß Anspruch 1, eine Brennstoffzelle gemäß Anspruch 7 beziehungsweise ein Kraftfahrzeug gemäß Anspruch 8 gelöst. Bevorzugte Ausgestaltungen der Erfindung sind Gegenstand der abhängigen Ansprüche.

Es wird eine, vorzugsweise rechteckige Bipolarplatte für eine Brennstoffzelle mit einer Anodenplatte und einer Kathodenplatte bereitgestellt, wobei jeweils ein vorzugsweise rechteckiger aktiver Bereich sowie zwei inaktive Bereiche vorgesehen sind, die vorzugsweise an entgegengesetzten Seiten des aktiven Bereichs angeordnet sind.

Rechteckige Bipolarplatten mit rechteckigen aktiven Bereichen bieten den Vorteil, dass bei der erfindungsgemäßen Ausgestaltung die Leistungsdichte erhöht wird und insbesondere eine verbesserte Materialausnutzung der MEA ermöglicht wird.

Zwei inaktive Bereiche bedeutet in diesem Kontext nicht zwingend, dass nur zwei inaktive Bereiche vorhanden sein können, sondern bei bestimmten Ausführungsformen der Bipolarplatte auch mehr als zwei inaktive Bereiche vorgesehen sein können.

In beiden inaktiven Bereichen sind jeweils ein Versorgungsbereich mit zwei Hauptgasports zur Zu- und Abführung von Reaktionsgasen, nämlich Anodengas und Kathodengas, und einem Kühlmittelhauptport zur Zu- und Abführung von Kühlmittel sowie ein Verteilbereich zur Anbindung der Hauptgasports und des Kühlmittelhauptports an den aktiven Bereichen angeordnet.

Anodenplatte und Kathodenplatte sind dabei derart ausgebildet und übereinander angeordnet, dass die Anodenplatte auf der von der Kathodenplatte abgewandten Seite offene Anodengaskanäle und die Kathodenplatte auf der von der Anodenplatte abgewandten Seite offene Kathodengaskanäle aufweist und, dass auf den einander zugewandten Seiten der Anodenplatte und der Kathodenplatte geschlossene Kühlmittelkanäle ausgebildet sind.

Geschlossene Kühlmittelkanäle bedeutet, dass die Kühlmittelkanäle im übereinander angeordneten Zustand der Anodenplatte und der Kathodenplatte geschlossen sind und ansonsten als offene Struktur in der Anoden- und der Kathodenplatte ausgestaltet sind.

In einer mit der erfindungsgemäßen Bipolarplatte aufgebauten Brennstoffzelle sind die Reaktionsgaskanäle mit einer MEA überdeckt.

Erfindungsgemäß sind die Anodengaskanäle und die Kathodengaskanäle überschneidungsfrei aus den jeweiligen Hauptgasports durch den Verteilbereich zum aktiven Bereich geführt.

Überschneidungsfrei bedeutet, dass die Anodengaskanäle und die Kathodengaskanäle in beiden Verteilbereichen der Anodenplatte und der Kathodenplatte nicht übereinander geführt sind.

Die Anodengaskanäle münden an einer Seite und die Kathodengaskanäle an der anderen Seite in den aktiven Bereich ein, so dass diese vorzugsweise weitestmöglich voneinander beabstandet sind, um eine nachstehend beschriebene Verteilung der Reaktionsgaskanäle zu erleichtern. Anschließend werden diese im aktiven Bereich umgelenkt und über die Breite des aktiven Bereichs verteilt, wobei nach der Verteilung über die Breite des aktiven Bereichs eine Umlenkung in Richtung des jeweils gegenüberliegenden Verteilbereichs erfolgt.

Da auch die Anodengaskanäle und die Kathodengaskanäle untereinander überschneidungsfrei verlaufen, wird für die Verteilung über die Breite des aktiven Bereichs Raum benötigt. Dieser Raum wird nachstehend auch als aktiver Verteilbereich bezeichnet.

So wird ein zum Rand der Bipolarplatte gelegener Reaktionsgaskanal direkt zum gegenüberliegenden Verteilbereich geführt und der am weitesten innen auf der Bipolarplatte gelegene Reaktionsgaskanal wird als erster Reaktionsgaskanal umgelenkt. Die dazwischen liegenden Reaktionsgaskanäle werden gemäß der Vorgabe, sich nicht zu überschneiden, umgelenkt. Die zweite Umlenkung der Reaktionsgaskanäle in Richtung des gegenüberliegenden Verteilbereichs erfolgt gleichermaßen.

Die Kühlmittelkanäle verzweigen sich nach dem Austritt aus dem Kühlmittelhauptport im Verteilbereich und werden in Richtung der Anodengaskanäle und in Richtung der Kathodengaskanäle umgelenkt, wobei im Überschneidungsbereich der Kühlmittelkanäle mit den Anodengaskanälen und den Kathodengaskanälen diese derart umgelenkt werden, dass die Kühlmittelkanäle mit den Anodengaskanälen und den Kathodengaskanälen überschneidungsfrei und mit diesen alternierend in den aktiven Bereich einmünden und durch diesen verlaufen. Auch im aktiven Bereich verlaufen die Kühlmittelkanäle parallel zu den Reaktionsgaskanälen und werden mit diesen umgelenkt, wodurch eine Zellreaktion ermöglicht wird.

Vorzugsweise erfolgt die Umlenkung der Reaktionsgaskanäle rechtwinklig, da sich vorteilhafterweise dadurch der durch den Einsatz einer rechtwinkligen Bipolarplatte gegebene vorteilhafte Effekt verstärkt.

Durch vorbeschriebene Ausgestaltung ergibt sich im Einmündungsbereich des aktiven Bereichs der aktive Verteilbereich, in dem Anodengaskanäle und Kathodengaskanäle jeweils in Kombination mit den Kühlmittelkanälen über die Breite des aktiven Bereichs verteilt werden.

In Kombination mit der Ausgestaltung der Verteilbereiche ergibt sich vorteilhafterweise eine deutliche Steigerung der Leistungsdichte der erfindungsgemäßen Bipolarplatte gegenüber Bipolarplatten aus dem Stand der Technik, da sich zum einen vergleichsweise dünne Bipolarplatten realisieren lassen und zum anderen durch die teilweise Verteilung der Medien im aktiven Bereich, dieser zu Lasten der Verteilbereiche vergrößert werden kann.

Nach einer besonders bevorzugten Ausführungsform der Erfindung ist der Kühlmittelhauptport in den Versorgungsbereichen zwischen den beiden Hauptgasports für das Anodengas und das Kathodengas angeordnet, so dass die erfindungsgemäße Anordnung der Reaktionsgaskanäle und der Kühlmittelkanäle im Verteilbereich in geometrisch einfacher Weise erfolgen kann.

Nach einer bevorzugten Ausführungsform der erfindungsgemäßen Bipolarplatte werden zur Ausbildung der verzweigten Kühlmittelkanäle in beiden Verteilbereichen der Anodenplatte erste Kühlmittelkanäle, die sich vom Kühlmittelhauptport erstrecken und im Verteilbereich blind enden, und zweite Kühlmittelkanäle, die sich vom aktiven Bereich erstrecken und im Verteilbereich blind enden, vorgesehen. Zudem werden in beiden Verteilbereichen der Kathodenplatte erste Kühlmittelkanäle, die sich vom Kühlmittelhauptport erstrecken und im Verteilbereich blind enden, und zweite Kühlmittelkanäle, die sich vom aktiven Bereich erstrecken und im Verteilbereich blind enden, vorgesehen. Die ersten Kühlmittelkanäle der Anodenplatte sind dabei mit den zweiten Kühlmittelkanälen der Kathodenplatte und die ersten Kühlmittelkanäle der Kathodenplatte mit den zweiten Kühlmittelkanälen der Anodenplatte fluidisch verbunden.

Diese Ausgestaltung erlaubt vorteilhafterweise eine sehr einfache Ausgestaltung der Führung der unterschiedlichen Kanäle für die Betriebsmedien.

Die Verzweigung der Kühlmittelkanäle erfolgt vorzugsweise ebenfalls rechtwinklig, um den Raumbedarf des Verteilbereichs möglichst zu minimieren.

Vorzugsweise ist die fluidische Verbindung der ersten Kühlmittelkanäle der Anodenplatte mit den zweiten Kühlmittelkanälen der Kathodenplatte und der ersten Kühlmittelkanäle der Kathodenplatte mit den zweiten Kühlmittelkanälen der Anodenplatte in dem Bereich des Verteilbereichs gegeben, in dem die ersten Kühlmittelkanäle und die zweiten Kühlmittelkanäle blind enden. Durch diese vorteilhafte Ausgestaltung wird sichergestellt, dass in den Kühlmittelkanälen keine Totvolumina vorhanden sind, sondern das Kühlmittel am blinden Ende lediglich aus der Anodenplatte in die Kathodenplatte umgelenkt wird und umgekehrt.

Besonders bevorzugt sind die ersten Kühlmittelkanäle der Anodenplatte und der Kathodenplatte teilweise derart angeordnet, dass diese gemeinsame erste Kühlmittelkanäle ausbilden. Vorzugsweise sind diese gemeinsam ausgebildeten Kühlmittelkanäle direkt am Kühlmittelhauptport angeordnet und erstecken sich von diesem weg in Richtung des aktiven Bereichs, bis diese in der Anodenplatte von den Anodengaskanälen und in der Kathodenplatte von den Kathodengaskanälen weggelenkt werden. In diesem Abschnitt sind keine gemeinsamen ersten Kühlmittelkanäle ausgebildet, sondern in der Anodenplatte und der Kathodenplatte separate erste Kühlmittelkanäle ausgebildet. Dieser Abschnitt der ersten Kühlmittelkanäle wird von den jeweiligen Reaktionsgaskanälen fortgelenkt, wobei dabei die ersten Kühlmittelkanäle beabstandet zum aktiven Bereich verlaufen und blind enden. In einer Aufsicht zeigen die Kühlmittelkanäle der Bipolarplatte in dem jeweiligen Verteilbereich eine T-förmige Struktur.

Die zweiten Kühlmittelkanäle verlaufen vorzugsweise in beiden Verteilbereichen in dem Bereich, in dem sich die Reaktionsgaskanäle vom aktiven Bereich zum jeweiligen Hauptport erstrecken, vorzugsweise parallel zu den Reaktionsgaskanälen, so dass die Führung der einzelnen Kanäle möglichst platzsparend erfolgen kann. Bevorzugt ist es auch, die Kühlmittelkanäle versetzt zu den Reaktionsgaskanälen anzuordnen, so dass vorteilhafterweise ein größerer Strömungsquerschnitt gewählt werden kann.

Besonders bevorzugt ist es, dass die zweiten Kühlmittelkanäle der Anodenplatte im Bereich der Anodengaskanäle blind enden und die zweiten Kühlmittelkanäle der Kathodenplatte im Bereich der Kathodengaskanäle blind enden, so dass vorteilhafterweise der Platzbedarf für diese Strukturen im Verteilbereich klein gehalten werden kann.

Durch die erfindungsgemäße Ausgestaltung des Verteilbereichs einer Bipolarplatte beziehungsweise der Anoden- und Kathodenplatte, die zu einer Bipolarplatte zusammengefügt sind, ist es vorteilhafterweise möglich, dass in platzsparender Weise lediglich zwei Betriebsmedien, d.h. jeweils ein Reaktionsgas und das Kühlmittel in der Bipolarplatte übereinander geführt werden müssen, wobei die Kühlmittelkanäle in unterschiedlichen Abschnitten unterschiedliche Strömungsquerschnitte und/oder Höhen aufweisen können.

So kann insgesamt mit der erfindungsgemäßen Bipolarplatte der Flächenbedarf der inaktiven Bereiche verringert werden, so dass im Gegenzug der aktive Bereich entsprechend größer ausgelegt werden kann und somit eine Leistungssteigerung der entsprechenden Brennstoffzelle gegeben ist.

Der aktive Bereich der erfindungsgemäßen Bipolarplatte kann unterschiedlich ausgestaltet sein. So sind geradlinig verlaufende Reaktionsgaskanäle und Kühlmittelkanäle bevorzugt. Jedoch sind auch Kanäle mit Umlenkungen und sonstigen Ausgestaltungen möglich.

Bevorzugt sind im Verteilbereich die Kühlmittelkanäle in unterschiedlichen Bereichen mit unterschiedlichen Strömungsquerschnitten und/oder Höhen ausgebildet, um möglichst flache Bipolarplatten auszubilden.

Die erfindungsgemäße Bipolarplatte ist vorzugsweise rechteckig ausgebildet und die inaktiven Bereiche sind vorzugsweise an entgegengesetzten Enden der Bipolarplatte befindlich, wobei der vorzugsweise rechteckige aktive Bereich zwischen den inaktiven Bereichen ausgebildet ist.

Gegenstand der Erfindung sind zudem eine Brennstoffzelle, die zumindest zwei vorbeschriebene erfindungsgemäße Bipolarplatten aufweist, zwischen denen eine Membran-Elektroden-Einheit angeordnet ist, sowie ein Kraftfahrzeug, in dem eine derartige Brennstoffzelle angeordnet ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: in einer schematischen Ansicht die erfindungsgemäße Bipolarplatte,
- Figur 2: in einer schematischen Ansicht eine Anodenplatte der erfindungsgemäßen Bipolarplatte,
- Figur 3: in einer schematischen Ansicht eine Kathodenplatte der erfindungsgemäßen Bipolarplatte,
- Figur 4: in einer geschnittenen Ansicht entlang eines Schnitts A-A die erfindungsgemäße Bipolarplatte, und
- Figur 5: in einer geschnittenen Ansicht entlang eines Schnitts B-B die erfindungsgemäße Bipolarplatte.

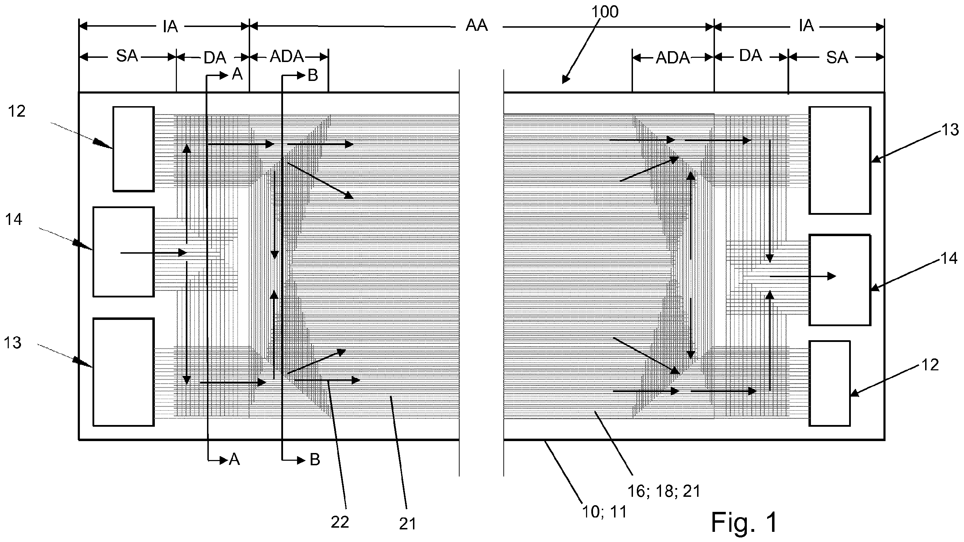

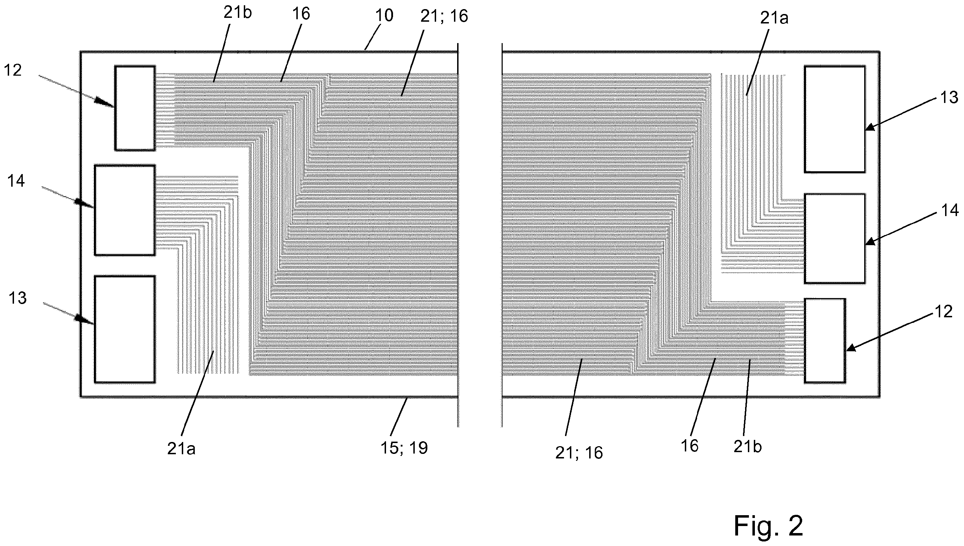

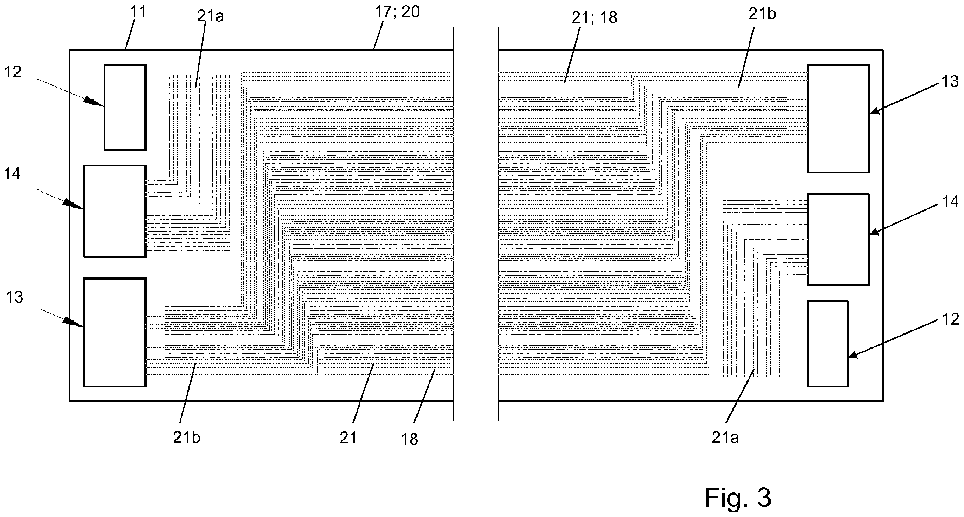

Die rechteckige Bipolarplatte 100 gemäß Figur 1 für eine nicht dargestellte Brennstoffzelle weist eine Anodenplatte 10 (Figur 2) und eine Kathodenplatte 11 (Figur 3) auf, die zur Ausbildung der Bipolarplatte 100 übereinander angeordnet sind. Die in den Figuren 1 bis 3 dargestellten Strukturen sind unabhängig von ihrer Anordnung auf bestimmten Seiten der Anodenplatte 10 und der Kathodenplatte 11 sichtbar.

Die Anodenplatte 10 und die Kathodenplatte 11 und somit die Bipolarplatte 100 weisen einen mittig angeordneten und rechteckig ausgebildeten aktiven Bereich AA auf, in dem bei einer Brennstoffzelle die Zellreaktion abläuft. Dieser aktive Bereich AA wird auch als Flussfeld bezeichnet. Auf zwei gegenüberliegenden Seiten der Bipolarplatte 100 und damit auf gegenüberliegenden Seiten des aktiven Bereichs AA ist jeweils ein inaktiver Bereich IA vorgesehen, der in einen Versorgungsbereich SA mit zwei Hauptgasports 12, 13 zur Zu- und Abführung von Reaktionsgasen (Anodengas und Kathodengas) und einen Kühlmittelhauptport 14 zur Zu- und Abführung von Kühlmittel, und einen Verteilbereich DA zur Anbindung der Hauptgasports 12, 13 und des Kühlmittelhauptports 14 an den aktiven Bereich AA unterteilt ist.

Nachstehende Ausführungen beziehen sich immer auf beide inaktive Bereiche IA und insbesondere beide Verteilbereiche DA, auch wenn die Beschreibung im Singular erfolgt.

Die Hauptgasports 12, 13 und der Kühlmittelhauptport 14 sind derart angeordnet, dass diese in einem, hier nicht dargestellten, Brennstoffzellenstapel im Wesentlichen miteinander fluchten und Hauptversorgungskanäle innerhalb des Brennstoffzellenstapels ausbilden.

Zur optimalen Ausnutzung des zur Verfügung stehenden Platzes im inaktiven Bereich IA und im Verteilbereich DA ist der Kühlmittelhauptport 14 zwischen dem Hauptport 12 für das Anodengas und dem Hauptport 13 für das Kathodengas angeordnet.

Weiterhin sind die Anodenplatte 10 und die Kathodenplatte 11 derart ausgebildet und übereinander angeordnet, dass die Anodenplatte 10 auf der von der Kathodenplatte 11 abgewandten Seite 15 offene Anodengaskanäle 16 und die Kathodenplatte 11 auf der von der Anodenplatte 10 abgewandten Seite 17 offene Kathodengaskanäle 18 aufweist.

Die Anodengaskanäle 16 und die Kathodengaskanäle 18 werden überschneidungsfrei aus den Hauptgasports 12, 13 durch den Verteilbereich DA geführt. Anschließend münden die Anodengaskanäle 16 und die Kathodengaskanäle 18 in den aktiven Bereich AA ein. Dies erfolgt an entgegengesetzten Seiten der Bipolarplatte 100. Im aktiven Bereich AA werden die Anodengaskanäle 16 und die Kathodengaskanäle 18 rechtwinklig umgelenkt und über die Breite des aktiven Bereichs AA verteilt. Nach der Verteilung über die Breite des aktiven Bereichs AA erfolgt eine zweite rechtwinklige Umlenkung in Richtung des jeweils gegenüberliegenden Verteilbereichs DA. Da für die zweimalige Umlenkung der Anodengaskanäle 16 und der Kathodengaskanäle 18 damit sich diese direkt zum gegenüberliegenden Verteilbereich DA erstrecken, Raum benötigt wird, ergibt sich im aktiven Bereich AA ein aktiver Verteilbereich ADA. Im aktiven Verteilbereich ADA erfolgt ebenfalls die Zellreaktion, wie im sonstigen aktiven Bereich AA.

Auf den einander zugewandten Seiten 19, 20 der Anodenplatte 10 und der Kathodenplatte 11 sind geschlossene Kühlmittelkanäle 21, 21a, 21b ausgebildet, die in Anodenplatte 10 und in Kathodenplatte 11 als offene Kühlmittelkanäle 21, 21a, 21b vorliegen und erst durch das übereinander Anordnen zu geschlossenen Kühlmittelkanälen 21, 21a, 21b werden. Bei der Bipolarplatte 100 stellen sich die Kühlmittelkanäle 21, 21a, 21b derart dar, dass sich die Kühlmittelkanäle 21, 21a, 21b nach dem Austritt aus dem Kühlmittelhauptport 14 im Verteilbereich DA T-förmig verzweigen und nach der Verzweigung jeweils in Richtung der Anodengaskanäle 16 und in Richtung der Kathodengaskanäle 18 umgelenkt sind.

Die verzweigten Kühlmittelkanäle 21, 21a, 21b bilden dann einen Überschneidungsbereich mit den Anodengaskanälen 16 beziehungsweise den Kathodengaskanälen 18 aus, wobei in dem Überschneidungsbereich eine Umlenkung der Kühlmittelkanäle 21, 21a, 21b erfolgt, so dass diese in die gleiche Richtung wie die jeweiligen Anodengaskanäle 16 und Kathodengaskanäle 18 verlaufen.

Zur Ausbildung vorbeschriebener Kühlmittelkanäle 21, 21a, 21b sind im Verteilbereich DA der Anodenplatte 10 und der Kathodenplatte 11 jeweils erste Kühlmittelkanäle 21a und zweite Kühlmittelkanäle 21b angeordnet. Die ersten Kühlmittelkanäle 21a führen vom Kühlmittelhauptport 14 in den Verteilbereich DA und werden vor dem aktiven Bereich AA derart umgelenkt, dass diese sich in der Anodenplatte 10 vom Hauptgasport 12 für das Anodengas und sich in der Kathodenplatte 11 vom Hauptgasport 13 für das Kathodengas entfernen und dann parallel zum aktiven Bereich AA verlaufen. Die ersten Kühlmittelkanäle 21a der Anodenplatte 10 enden blind zwischen dem Hauptgasport 13 für das Kathodengas und dem aktiven Bereich AA und die ersten Kühlmittelkanäle 21a der Kathodenplatte enden blind zwischen dem Hauptgasport 12 für das Anodengas und dem aktiven Bereich AA.

Die zweiten Kühlmittelkanäle 21b führen vom aktiven Bereich AA zu den beiden Hauptgasports 12, 13 und sind mit den Anodengaskanälen 16 beziehungsweise den Kathodengaskanälen versetzt übereinander angeordnet. Die zweiten Kühlmittelkanäle 21b enden im Verteilbereich DA blind. Beim Anordnen der Anodenplatte 10 und der Kathodenplatte 11 übereinander, verbinden sich die ersten Kühlmittelkanäle 21a der Anodenplatte 10 mit den zweiten Kühlmittelkanälen 21b der Kathodenplatte 11 und die ersten Kühlmittelkanäle 21a der Kathodenplatte 11 mit den zweiten Kühlmittelkanälen 21b der Anodenplatte 10.

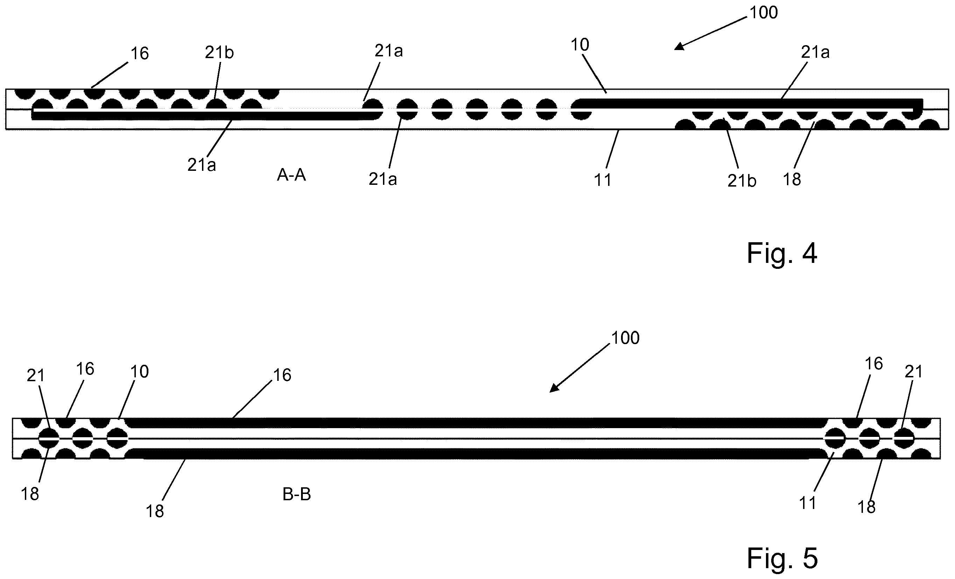

Die fluidische Verbindung von ersten Kühlmittelkanälen 21a mit den zweiten Kühlmittelkanälen 21b ist in Figur 4, die den Schnitt durch die Bipolarplatte 100 entlang der Linie A-A darstellt, gezeigt. Mittig sind die ersten Kühlmittelkanäle 21a von Anodenplatte 10 und Kathodenplatte 11 dargestellt, die zu einem gemeinsamen ersten Kühlmittelkanal 21a vereinigt sind. Diese sind quer geschnitten gezeigt. Die Umlenkung der ersten Kühlmittelkanäle 21a von Anodenplatte 10 und Kathodenplatte 11 in entgegengesetzte Richtungen ist durch längs geschnittene erste Kühlmittelkanäle 21a gezeigt. Diese treffen dann auf quer geschnitten dargestellte zweite Kühlmittelkanäle 21b in der jeweils anderen Platte 10, 11. Im Bereich dieser fluidischen Verbindung sind über beziehungsweise unter den zweiten Kühlmittelkanälen 21b die Anodengaskanäle 16 beziehungsweise die Kathodengaskanäle 18 parallel und gleichzeitig versetzt angeordnet.

Da die Anodengaskanäle 16 und die Kathodengaskanäle 18 jeweils in Verbindung mit zweiten Kühlmittelkanälen 21b an entgegengesetzten Seiten des aktiven Bereich AA eintreten, erfolgt nach Eintritt eine Verteilung über die Breite des aktiven Bereichs AA. Die daraus resultierenden Kühlmittelströme sind durch Pfeile 22 dargestellt.

Die zur Verteilung der Betriebsmedien über die Breite des aktiven Bereichs AA vorgesehenen Strukturen sind in Figur 5, die den Schnitt B-B durch die Bipolarplatte 100 zeigt, wiedergegeben. Mittig sind längs geschnittene Anodengaskanäle 16 und Kathodengaskanäle 18 gezeigt und beidendseitig quer geschnittene Anodengaskanäle 16 und Kathodengaskanäle 18, zwischen denen Kühlmittelkanäle 21 verlaufen. Zusammen mit Figur 1 ergibt sich ein konkretes Bild der Querverteilung der Betriebsmedien, die jedoch nur beispielhaft und nicht limitierend ist.

### Bezugszeichenliste

- 100: Bipolarplatte
- 10: Anodenplatte
- 11: Kathodenplatte
- 12: Hauptgasport für Anodengas
- 13: Hauptgasport für Kathodengas
- 14: Kühlmittelhauptport
- 15: Seite der Anodenplatte, von der Kathodenplatte abgewandt
- 16: Anodengaskanäle
- 17: Seite der Kathodenplatte, von der Anodenplatte abgewandt
- 18: Kathodengaskanäle
- 19: Seite der Anodenplatte der Kathodenplatte zugewandt
- 20: Seite der Kathodenplatte der Anodenplatte zugewandt
- 21: Kühlmittelkanäle
- 21a: erste Kühlmittelkanäle
- 21b: zweite Kühlmittelkanäle
- 22: Pfeile

- AA: Aktiver Bereich (Reaktionsbereich, active area)
- IA: Inaktiver Bereich (inactive area)
- SA: Versorgungsbereich (supply area)
- DA: Verteilbereich (distribution area)
- ADA: aktiver Verteilbereich (active distribution area)

## Patentansprüche

1. Bipolarplatte für eine Brennstoffzelle mit einer Anodenplatte (10) und einer Kathodenplatte (11), jeweils einen aktiven Bereich (AA) sowie zwei inaktive Bereiche (IA) aufweisend, wobei in jedem inaktiven Bereich (IA) ein Versorgungsbereich (SA) mit zwei Hauptgasports (12, 13) zur Zu- und Abführung von Reaktionsgasen und ein Kühlmittelhauptport (14) zur Zu- und Abführung von Kühlmittel, und ein Verteilbereich (DA) zur Anbindung der zwei Hauptgasports (12, 13) und des Kühlmittelhauptports (14) an den aktiven Bereich (AA) angeordnet sind, wobei die Anodenplatte (10) und die Kathodenplatte (11) derart ausgebildet und übereinander angeordnet sind, dass die Anodenplatte (10) auf der von der Kathodenplatte (11) abgewandten Seite (15) offene Anodengaskanäle (16) und die Kathodenplatte (11) auf der von der Anodenplatte (10) abgewandten Seite (17) offene Kathodengaskanäle (18) aufweist, und dass auf den einander zugewandten Seiten (19, 20) der Anodenplatte (10) und der Kathodenplatte (11) geschlossene Kühlmittelkanäle (21) ausgebildet sind,
**dadurch gekennzeichnet,**
**dass** die Anodengaskanäle (16) und die Kathodengaskanäle (18) überschneidungsfrei aus den Hauptgasports (12, 13) durch den Verteilbereich (DA) geführt sind und an entgegengesetzten Seiten in den aktiven Bereich (AA) einmünden, im aktiven Bereich (AA) umgelenkt und über die Breite des aktiven Bereichs (AA) verteilt sind, dass nach der Verteilung über die Breite des aktiven Bereichs (AA) eine Umlenkung in Richtung des jeweils gegenüberliegenden Verteilbereichs (DA) gegeben ist, und dass sich die Kühlmittelkanäle (21) im Verteilbereich (DA) verzweigen und nach der Verzweigung in Richtung der Anodengaskanäle (16) und in Richtung der Kathodengaskanäle (18) umgelenkt sind und sich in einem Überschneidungsbereich mit den Anodengaskanälen (16) und den Kathodengaskanälen (18) überschneiden und jeweils gemeinsam derart umgelenkt sind, dass die Kühlmittelkanäle (21) mit den Anodengaskanälen (16) und den Kathodengaskanälen (18) überschneidungsfrei und mit diesen alternierend in den aktiven Bereich (AA) einmünden und dort parallel mit diesen durch den aktiven Bereich (AA) verlaufen.

2. Bipolarplatte (100) nach Anspruch 1, **dadurch gekennzeichnet, dass** die Bipolarplatte (100) und/oder der aktive Bereich (AA) rechtwinklig ausgebildet sind.

3. Bipolarplatte (100) nach Anspruch 1 oder 2, **dadurch gekennzeichnet, dass** die Umlenkung der Anodengaskanäle (16) und der Kathodengaskanäle (18) jeweils rechtwinklig erfolgt und dass optional die Verzweigung und Umlenkung der Kühlmittelkanäle (21) rechtwinklig erfolgt.

4. Bipolarplatte (100) nach einem der Ansprüche 1 bis 3, **dadurch gekennzeichnet, dass** jeweils im Versorgungsbereich (SA) der Kühlmittelhauptport (14) zwischen den beiden Hauptgasports (12, 13) angeordnet ist.

5. Bipolarplatte (100) nach einem der Ansprüche 1 bis 4, **dadurch gekennzeichnet, dass** zur Ausbildung der verzweigten Kühlmittelkanäle (21) in beiden Verteilbereichen (DA) der Anodenplatte (10) erste Kühlmittelkanäle (21a), die sich vom Kühlmittelhauptport (14) erstrecken und im Verteilbereich (DA) blind enden, und zweite Kühlmittelkanäle (21b), die sich vom aktiven Bereich (AA) erstrecken und im Verteilbereich (DA) blind enden, vorgesehen sind, in beiden Verteilbereichen (DA) der Kathodenplatte (11) erste Kühlmittelkanäle (21a), die sich vom Kühlmittelhauptport (14) erstrecken und im Verteilbereich (DA) blind enden vorgesehen sind, und zweite Kühlmittelkanäle (21b), die sich vom aktiven Bereich (AA) erstrecken und im Verteilbereich (DA) blind enden, vorgesehen sind, und die ersten Kühlmittelkanäle (21a) der Anodenplatte (10) mit den zweiten Kühlmittelkanälen (21b) der Kathodenplatte (11) und die ersten Kühlmittelkanäle (21a) der Kathodenplatte (11) mit den zweiten Kühlmittelkanälen (21b) der Anodenplatte (10) fluidisch verbunden sind.

6. Bipolarplatte (100) einem der Ansprüche 1 bis 5, **dadurch gekennzeichnet, dass** im Verteilbereich (DA) die Kühlmittelkanäle (21, 21a, 21b) in unterschiedlichen Bereichen unterschiedliche Strömungsquerschnitte und/oder Höhen aufweisen.

7. Brennstoffzelle umfassend zumindest zwei Bipolarplatten (100) nach einem der Ansprüche 1 bis 6 und eine zwischen diesen angeordnete Membran-Elektroden-Einheit.

8. Kraftfahrzeug, eine Brennstoffzelle nach Anspruch 7 aufweisend.

## Claims

1. Bipolar plate for a fuel cell having an anode plate (10) and a cathode plate (11), having in each case one active area (AA) and two inactive areas (IA), wherein in each inactive area (IA) are arranged a supply area (SA) having two main gas ports (12, 13) for the supply and discharge of reaction gases and a coolant main port (14) for the supply and discharge of coolant, and a distribution area (DA) for connecting the two main gas ports (12, 13) and the coolant main port (14) to the active area (AA), wherein the anode plate (10) and the cathode plate (11) are designed such and are arranged above one another such that the anode plate (10) has on the side (15) averted from the cathode plate (11) open anode gas ducts (16) and the cathode plate (11) has on the side (17) averted from the anode plate (10) open cathode gas ducts (18), and that on the sides (19, 20), facing one another, of the anode plate (10) and of the cathode plate (11) are formed closed coolant ducts (21),
**characterised in**
**that** the anode gas ducts (16) and the cathode gas ducts (18) are guided without overlapping out of the main gas ports (12, 13) through the distribution area (DA) and open at opposite sides into the active area (AA), are redirected in the active area (AA) and distributed across the width of the active area (AA), that after the distribution across the width of the active area (AA) there is a redirection in the direction of the respectively opposite distribution area (DA), and that the coolant ducts (21) branch in the distribution area (DA) and after the branching are redirected in the direction of the anode gas ducts (16) and in the direction of the cathode gas ducts (18) and overlap in an overlapping area with the anode gas ducts (16) and the cathode gas ducts (18) and in each case are redirected together such that the coolant ducts (21), with the anode gas ducts (16) and the cathode gas ducts (18), open, without overlapping with and alternating with said anode gas ducts and cathode gas ducts, into the active area (AA), and run there in parallel with them through the active area (AA).

2. Bipolar plate (100) according to claim 1, **characterised in that** the bipolar plate (100) and/or the active area (AA) are orthogonal in design.

3. Bipolar plate (100) according to claim 1 or 2, **characterised in that** the redirection of the anode gas ducts (16) and of the cathode gas ducts (18) takes place in each case orthogonally and that optionally the branching and redirecting of the coolant ducts (21) takes place orthogonally.

4. Bipolar plate (100) according to any of claims 1 to 3, **characterised in that** in each case in the supply area (SA) the coolant main port (14) is arranged between the two main gas ports (12, 13).

5. Bipolar plate (100) according to any of claims 1 to 4, **characterised in that** for forming the branched coolant ducts (21) in both distribution areas (DA) of the anode plate (10) first coolant ducts (21a), which extend from the coolant main port (14) and end in a blind manner in the distribution area (DA), and second coolant ducts (21b), which extend from the active area (AA) and end in a blind manner in the distribution area (DA), are provided, in both distribution areas (DA) of the cathode plate (11) first coolant ducts (21a), which extend from the coolant main port (14) and end in a blind manner in the distribution area (DA) are provided, and second coolant ducts (21b), which extend from the active area (AA) and end in a blind manner in the distribution area (DA), are provided, and the first coolant ducts (21a) of the anode plate (10) are fluidically connected with the second coolant ducts (21b) of the cathode plate (11) and the first coolant ducts (21a) of the cathode plate (11) are fluidically connected with the second coolant ducts (21b) of the anode plate (10).

6. Bipolar plate (100) according to any of claims 1 to 5, **characterised in that** in the distribution area (DA) the coolant ducts (21, 21a, 21b) have different flow cross-sections and/or heights in different areas.

7. Fuel cell comprising at least two bipolar plates (100) according to any of claims 1 to 6 and a membrane electrode unit arranged between them.

8. Motor vehicle having a fuel cell according to claim 7.

## Revendications

1. Plaque bipolaire pour une pile à combustible avec une plaque d'anode (10) et une plaque de cathode (11), présentant respectivement une région active (AA) et deux régions inactives (IA), dans lequel une région d'alimentation (SA) avec deux orifices de gaz principaux (12, 13) destinés à l'alimentation et à l'évacuation de gaz de réaction et un orifice principal de réfrigérant (14) destiné à l'alimentation et à l'évacuation d'un réfrigérant et une région de répartition (DA) permettant de relier les deux orifices de gaz principaux (12, 13) et l'orifice principal de réfrigérant (14) à la région active (AA) sont agencées au sein de chaque région inactive (IA), dans lequel la plaque d'anode (10) et la plaque de cathode (11) sont réalisées et agencées l'une au-dessus de l'autre de telle manière que la plaque d'anode (10) présente des canaux de gaz d'anode (16) ouverts sur le côté (15) opposé à la plaque de cathode (11) et la plaque de cathode (11) présente des canaux de gaz de cathode (18) ouverts sur le côté (17) opposé à la plaque d'anode (10), et en ce que des canaux de réfrigérant (21) fermés sont réalisés sur les côtés (19, 20) mutuellement opposés de la plaque d'anode (10) et de la plaque de cathode (11),
**caractérisée en ce que**
les canaux de gaz d'anode (16) et les canaux de gaz de cathode (18) sont guidés à travers la région de répartition (DA) à partir des orifices de gaz principaux (12, 13) sans se croiser et débouchent dans la région active (AA) au niveau de côtés opposés, puis sont déviés dans la région active (AA) et sont répartis sur la largeur de la région active (AA), **en ce qu'**une déviation en direction de la région de répartition (DA) respectivement opposée est fournie après la répartition sur la largeur de la région active (AA), et **en ce que** les canaux de réfrigérant (21) se ramifient dans la région de répartition (DA) et, après la ramification, sont déviés en direction des canaux de gaz d'anode (16) et en direction des canaux de gaz de cathode (18) et s'entrecroisent, dans une région de croisement, avec les canaux de gaz d'anode (16) et les canaux de gaz de cathode (18) et sont déviés de manière respectivement conjointe de telle manière que les canaux de réfrigérant (21) débouchent dans la région active (AA) sans se croiser avec les canaux de gaz d'anode (16) et les canaux de gaz de cathode (18) et en alternant avec ceux-ci et s'étendent à travers la région active (AA) parallèlement à ceux-ci.

2. Plaque bipolaire (100) selon la revendication 1, **caractérisée en ce que** la plaque bipolaire (100) et/ou la région active (AA) est/sont réalisée(s) à angle droit.

3. Plaque bipolaire (100) selon la revendication 1 ou 2, **caractérisée en ce que** la déviation des canaux de gaz d'anode (16) et des canaux de gaz de cathode (18) se fait respectivement à angle droit, et **en ce que** la ramification et la déviation des canaux de réfrigérant (21) se fait facultativement à angle droit.

4. Plaque bipolaire (100) selon l'une quelconque des revendications 1 à 3, **caractérisée en ce que** l'orifice principal de réfrigérant (14) est agencé respectivement dans la région d'alimentation (SA) entre les deux orifices de gaz principaux (12, 13).

5. Plaque bipolaire (100) selon l'une quelconque des revendications 1 à 4, **caractérisée en ce que** des premiers canaux de réfrigérant (21a) s'étendant à partir de l'orifice principal de réfrigérant (14) et borgnes dans la région de répartition (DA) et des seconds canaux de réfrigérant (21b) s'étendant à partir de la région active (AA) et borgnes dans la région de répartition (DA) sont prévus au sein des deux régions de répartition (DA) de la plaque d'anode (10) et des premiers canaux de réfrigérant (21a) s'étendant à partir de l'orifice principal de réfrigérant (14) et borgnes dans la région de répartition (DA) et des seconds canaux de réfrigérant (21b) s'étendant à partir de la région active (AA) et borgnes dans la région de répartition (DA) sont prévus au sein des deux régions de répartition (DA) de la plaque de cathode (11) afin de former les canaux de réfrigérant (21) ramifiés, et les premiers canaux de réfrigérant (21a) de la plaque d'anode (10) sont en liaison fluidique avec les seconds canaux de réfrigérant (21b) de la plaque de cathode (11) et les premiers canaux de réfrigérant (21a) de la plaque de cathode (11) sont en liaison fluidique avec les seconds canaux de réfrigérant (21b) de la plaque d'anode (10).

6. Plaque bipolaire (100) selon l'une quelconque des revendications 1 à 5, **caractérisée en ce que** les canaux de réfrigérant (21, 21a, 21b) présentent des sections transversales d'écoulement et/ou des hauteurs différentes dans différentes régions au sein de la région de répartition (DA).

7. Pile à combustible comprenant au moins deux plaques bipolaires (100) selon l'une quelconque des revendications 1 à 6 et un groupe d'électrodes à membrane agencé entre lesdites plaques bipolaires.

8. Véhicule automobile comprenant une pile à combustible selon la revendication 7.
